# EUROPEAN PATENT SPECIFICATION

(11) **EP 1 853 029 B1**
(45) Date of publication and mention of the grant of the patent: **22.07.2009**
(21) Application number: 06252330.3
(22) Date of filing: 02.05.2006
(51) Int. Cl.: H04L 29/06

(54) **Apparatuses and method for generating and transmitting an anonymous routing identifier to maintain privacy of a SIP user agent's identity**
Vorrichtungen und Verfahren zum Generieren und Übermitteln eines anonymen Kennzeichners zur Wegelenkung, um die Vertraulichkeit der Identität eines SIP User Agents sicherzustellen
Procédé et dispositif pour générer et transmettre un identifiant anonyme de routage pour maintenir l'identité d'un agent SIP privée

(43) Date of publication of application: 07.11.2007
(60) Divisional application: 09162508.7
(73) Proprietor: Research In Motion Limited, Waterloo, Ontario N2L 3W8 (CA)
(72) Inventor: Buckley, Adrian, Tracy, California 95276 (US); Allen, Andrew, Mundelein, Illinois 60060 (US)
(74) Representative: Hibbert, Juliet Jane Grace

(56) References cited:
- US-A1- 2006 018 272
- ROSENBERG CISCO SYSTEMS C JENNINGS CISCO J PETERSON NEUSTAR J: "Identity Privacy in the Session Initiation Protocol (SIP); draft-rosenberg-sip-identity-privacy-00.tx t" IETF STANDARD-WORKING-DRAFT, INTERNET ENGINEERING TASK FORCE, IETF, CH, 11 July 2005 (2005-07-11), pages 1-16, XP015040195 ISSN: 0000-0004
- ROSENBERG CISCO SYSTEMS J: "Obtaining and Using Globally Routable User Agent (UA) URIs (GRUU) in the Session Initiation Protocol (SIP); draft-ietf-sip-gruu-06.txt" IETF STANDARD-WORKING-DRAFT, INTERNET ENGINEERING TASK FORCE, IETF, CH, vol. sip, no. 6, 20 October 2005 (2005-10-20), pages 1-41, XP015042701 ISSN: 0000-0004
- PETERSON NEUSTAR J: "A Privacy Mechanism for the Session Initiation Protocol (SIP); draft-peterson-sip-privacy-longterm-00.txt ;" IETF STANDARD-WORKING-DRAFT, INTERNET ENGINEERING TASK FORCE, IETF, CH, March 2002 (2002-03), pages 1-26, XP015033893 ISSN: 0000-0004

## Description

The present invention relates generally to communications in a communication system that utilizes session initiation protocol signaling between user agents that are to be parties to a communication dialog. More particularly, the present invention relates to apparatus, and an associated method, for generating and transmitting an anonymous GRUU (Globally Routable User agent URI), or other identifier, provided to a user agent pursuant to a communication dialog. By providing and using an anonymous identifier, the identity of the user agent is not made known to a third party, or other, agent.

### Background of the Invention

Advancements in digital communication technologies have permitted the development and deployment of many new types of communication devices. Communication systems in which communication devices are operable provide for the communication of data between sets of the communication devices. To ensure that operability of a communication device in a communication system, operating protocols and requirements are sometimes standardized, such as by a standard-setting body, and operation of a communication device in compliance with the operating standard ensures its operability with other communication devices that also operate in compliance with the standard.

Signaling protocols are regularly enumerated in such standards. Signaling protocols are used to set up communications between a set of communication devices to permit performance of a subsequent communication session. An SIP (Session Initiation Protocol) is an exemplary signaling protocol that is used pursuant to call set-up in IP (Internet Protocol)-based, and other packet data, communication schemes. Communication devices connectable to a packet data backbone, such as the Internet, that utilize SIP include, e.g., so-called, SIP phones. Such devices are peer-to-peer devices as they are capable of direct communications by way of the communication network without requiring that the communication network provide functionality other than, e.g., communication and routing of communication data.

The RFC 3261, for instance, sets forth operational requirements of the SIP pursuant to an establishment and maintenance of a dialog between a set of user agents. Typically, messages generated and communicated pursuant to the dialog between the user agents are communicated there between using a series of proxy hops through successive logical entities of the data network. The series of proxy hops is sometimes referred to as a route set. Messages are delivered to a user agent subsequent to the successive hops through the network. SIP messages include header parts having various header fields including, for instance, a contact header field. The RFC 3261 requires that the contact header fields of certain SIP messages to include URIs (Uniform Resource Identifiers) that are global. That is to say, the URIs must be able to be used at any element connected to the network. The RFC 3261 also mandates that the URIs be valid for requests sent outside of the dialog in which the contact URI is inserted. Exemplary SIP messages that include contact header fields populated with URIs include invite requests, register requests, and refer requests.

An IETF (Internet Engineering Task Force) draft standard proposal, the draft-IETF-SIP-GRUU, defines a type of URI, referred to as a globally routable user agent URI (GRUU). The GRUU has properties pertaining to routing to a user (Address of record) at a unique user agent and of being reachable from anywhere. Additionally, a new mechanism is defined in the draft standard by which an SIP user agent is able to obtain a GRUU from a SIP registrar of an SIP provider pursuant to registration. This mechanism thereby permits the URI to be used in the contact header fields of dialog-forming requests and responses in order to communicate the GRUU to other SIP user agents. Because a GRUU is provided by a user's SIP provider, the GRUU properties can be guaranteed by the provider. And, as a result, another SIP user agent is able to insert the GRUU in the request-URI of a SIP request targeted at the same specific AOR at a unique user agent instance in order to enable various applications, which require the GRUU property, including transfer and conferencing applications, to work reliably.

Existing schemes and protocols, however, fail to provide for user agent anonymity. For instance, when a call, i.e., a dialog, is established between a first user agent and a second user agent, and the call is to be transferred from the second user agent to a third user agent, the identity of the GRUU of the first user agent is ascertainable by the third user agent. Rosenberg et al. proposes a framework for user privacy in SIP in a document entitled "Identity Privacy in the Session Initiation Protocol (SIP) draft-rosenberg-sip-identity-privacy-00", XP015040195, dated 11 July 2005.

A mechanism is therefore required that provides for the creation of a GRUU that provides for persistence and provides a globally routable property but that also provides for anonymity.

It is in light of this background information related to SIP signaling and communications utilizing SIP that the significant improvements of the present invention have evolved.

### Brief Description of the Drawings

Figure 1 illustrates a functional block diagram of a communication system in which an embodiment of the present invention is operable.
Figure 2 illustrates a message sequence diagram representative of exemplary signaling generated during operation of the communication system shown in Figure 1.
Figure 3 illustrates an exemplary register request message generated pursuant to operation of an embodiment of the present invention.
Figure 4 illustrates an exemplary register response message generated pursuant to operation of an embodiment of the present invention.
Figure 5 illustrates an exemplary invite message generated pursuant to operation of an embodiment of the present invention.
Figure 6 illustrates an exemplary two-hundred okay message generated pursuant to operation of an embodiment of the present invention.
Figure 7 illustrates an exemplary refer message generated pursuant to operation of an embodiment of the present invention.
Figure 8 illustrates a functional block diagram of entities used pursuant to an alternate embodiment of the present invention.
Figure 9 illustrates an exemplary invite message generated pursuant to operation of an embodiment of the present invention.
Figure 10 illustrates a representation of another message generated pursuant to operation of an embodiment of the present invention.

### Detailed Description

The present invention, accordingly, advantageously provides apparatus, and an associated method, by which to communicate in a communication system that utilizes SIP (Session Initiation Protocol) signaling between user agents that are parties to a communication dialog.

Through operation of an embodiment of the present invention, a manner is provided for generating and transmitting an anonymous GRUU (Globally Routable User agent URI), or other identifier, provided to a user agent pursuant to a communication dialog.

In one aspect of the present invention, through the use of an anonymous identifier, the identity of a user agent is not made known to a third party, such as a call, or other, agent. And, thereby, the anonymity of the user agent is preserved. In the event, for example, of a call transfer, the user agent to which a call is transferred is not made aware of the actual identity of the other user agent forming a party to the call.

In another aspect of the present invention, a user agent generates an SIP message that includes a field populated with a value identifying the user agent to be anonymous-identifier capable. The field of the message is populated, for instance, with an identification of an AGRUU (Anonymous Globally Routable User agent URI). By including such a field and populating the field with the flag or value, the message alerts a recipient of the capability of the user agent to be operable to utilize the AGRUU, or other anonymous identifier. It also notifies a SIP registrar that an AGRUU is requested.

The message header field forms, for instance, a contact header field that includes the AGRUU-capable indication. The contact header field forms part of register request, register response, invite, 200 ok, refer, and other SIP messages. More generally, the value populating the field forms a textual string including one or more alphanumeric characters.

In another aspect of the present invention, a network device, such as an SIP registrar, receives the message generated by the user agent and is able to act thereon. The network device detects the value populating the field of the message, such as the contact header or "supported" field part of the message. And, the network device generates a register response for return to the user agent. In addition to information conventionally included in the register response, the network device includes a contact field that includes a value of the anonymous AGRUU for the user agent that sent the register request. The value of the AGRUU forms, for instance, a textual string of alphanumeric characters.

The register response, a 200 ok message, or other type of response message, also includes additional values, such as values of a RAND-ALG (randomizer algorithm) a BASE-ALG (base algorithm), an encrypted UID, and selectively, an encrypted AOR (address of record) value.

The user agent that receives the register response makes use of the values, i.e., text strings, of the contact header field of the register response message.

In another aspect of the present invention, a user agent also includes apparatus for generating additional messages, making use of the values contained in the response message provided to the user agent in response to a register request message. An exemplary such message includes a SIP invite message. The SIP invite message includes a supported field string identifying support of the user agent of an AGRUU or another textual string that indicates the support of anonymous GRUU. And, the invite message also includes a contact header field that includes a field identifying the AGRUU of the user agent. The invite message selectably further includes an encrypted UID value. The UID value is encrypted, for instance, using a key of a value known to the user agent. The key is based, for instance, on the IP, IMSI, a GPS location indication, a time of day indication, combinations thereof, as well as other values or their combinations known to their user agent. Other fields are also included such as Base ALG and RAND ALG that identify encryption keys that have been used to generate the Anonymous GRUU.

The user agent is able to generate other messages, including, for instance, a refer or transfer message. Such other messages also include contact header fields populated with strings of textual data analogous to that just-described.

Generally, pursuant to operation of an embodiment of the present invention, a message is generated, or received, with a supported field. Pursuant to generation of a message, the message is populated with an AGRUU, or another analogous value, in a supported field to identify support of AGRUU. And, a contact field is formed that includes a value of an AGRUU, or the like, and, selectively, also an encrypted UID value (EUID) and Base ALG and RAND ALG that identify encryption keys that have been used to generate the Anonymous GRUU. Support fields, contact fields, R-URI, and to: fields are all provided and utilized pursuant to an embodiment of the present invention and may contain these parameters as well.

In another aspect of the present invention, a manner is provided that provides for anonymity of a user agent. When, for instance, a dialog between the user agent and another party is transferred from that party to a subsequent party, the subsequent party is unable to obtain the identity of the user agent, due to its anonymity.

In these and other aspects, therefore, apparatus, and an associated method, is provided for a communication device operable pursuant to a session interface protocol. The apparatus facilitates use of a globally routable identifier while maintaining anonymity of the communication device. A message generator is configured to generate an SIP message. The message is populated with values indicating at least support of the communication device for a public globally routable identifier and an anonymous globally routable identifier. A response message detector is also provided that operates to detect a response message generated in response to the message generated by the message generator.

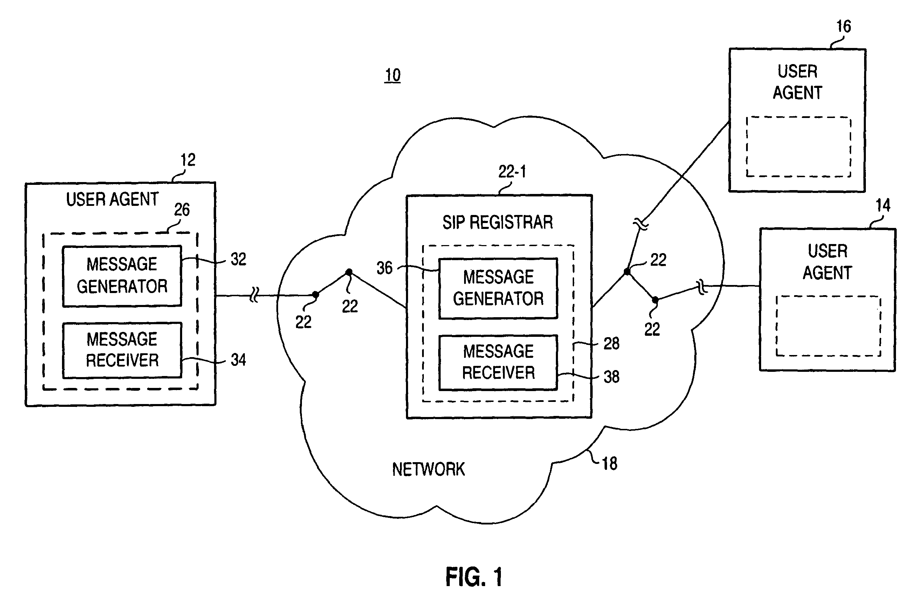

Referring first, therefore, to Figure 1, a communication system, shown generally at 10, provides for SIP-based (Session Initiation Protocol-based) communications between user agents, of which the user agents 12, 14, and 16 are representative. In a typical communication system, a large number of user agents, e.g., SIP phones, are connected to a communication fabric, i.e., network, here forming a packet data network 18. When a user comprises a mobile station, the network 18 is further representative of a radio access network.

The network 18 includes a plurality of entities, here generically referred to as nodes 22. The nodes are of any functional and physical entities, each typically identified by an address, such as an IP (Internet Protocol) address. Communications effectuated between a set of user agents is carried out by routing data packets that contain the data through successive ones of the nodes. The nodes form proxies, and the communication of the data between successive proxies formed of the nodes are sometimes referred to as proxy hops. The collection of proxy hops between the user agents is sometimes referred to as a route set.

Pursuant to conventional, SIP operation, a dialog is established between user agents responsive to completion of call set-up procedures. The call set-up procedures include exchange of signaling messages between devices of the communication system. A SIP registrar 22-1 is amongst the functional entities of the packet data network, comprising, or forming a portion of, a node device of the network. The SIP registrar is operable, amongst other things, in conjunction with the exchange of signaling messages carried out during call set-up between a set of user agents. In the exemplary representation of the figure, both the user agents 12, 14, and 16 and the SIP registrar 22-1 contain apparatus of an embodiment of the present invention.

Apparatus 26 is embodied at the user agent, and apparatus 28 is embodied at the SIP registrar. In other implementations, the apparatus and functionalities of such apparatus is implemented elsewhere in the communication system. The elements of the apparatus 26 and 28 are also functionally represented, implementable in any desired manner, including software executed by algorithms, hardware devices, and combinations thereof. Through operation of the apparatus and the methodologies carried out, improved privacy of communications is provided. Conventional implementations, in contrast, fail to ensure the anonymity of a user agent, and, hence, its user when, e.g., a call, i.e., a dialog, of a user agent is transferred from one called party to another called party.

The apparatus 26 and 28 are each operable, in the exemplary implementation, to generate SIP messages and to receive SIP messages that are constructed in manners that facilitate the anonymity of operation of the user agent. The apparatus 26, includes a message generator 32 and a message receiver 34. Others of the user agents include corresponding elements. And, the apparatus 28 embodied at the SIP registrar 22-1 includes a message generator 36 and a message receiver 38. Messages generated by the respective message generators include any conventional, SIP message, such as a register request, a register reply, e.g., a 200 ok message, an invite message, and a refer message. Details of the general formats of such messages are in general conformity with existing protocols.

When a dialog, i.e., a call or communication session, is to be established, the user agent must first be registered. To become registered, the user agent generates and sends a register request message.

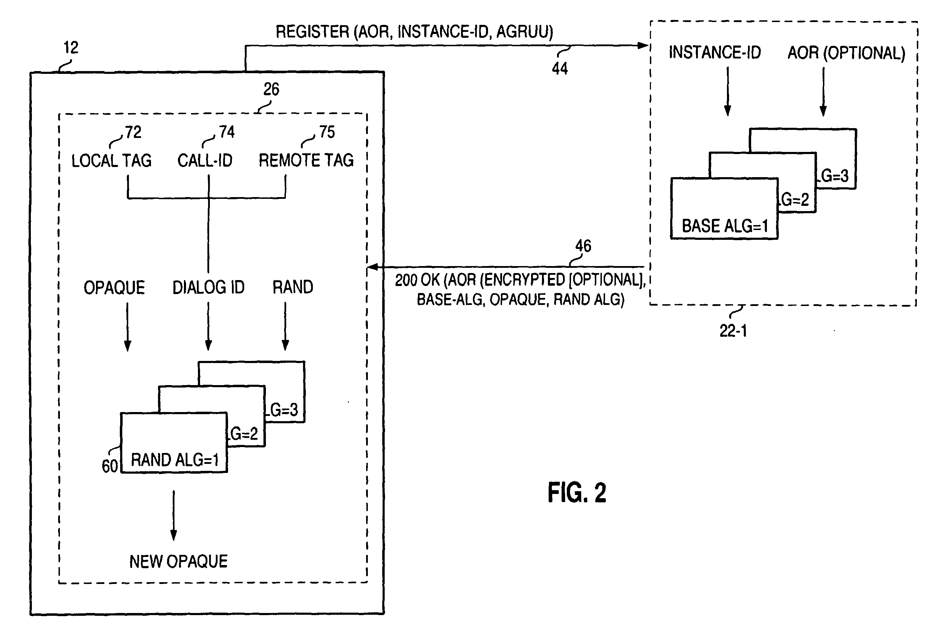

Figure 2 illustrates an exemplary exchange of messages between the user agent 12 and the SIP register 22-1 pursuant to registration of the user agent through the generation, by the message generator 32 of a register request. In Figure 2, the register request is indicated by the segment 44, here generated by the user agent 26 for delivery to the SIP registrar 22-1. The register request, as indicated by the segment 44, includes an AOR (address of record), an instance-ID, and an AGRUU (anonymous globally routable user agent URI)-capable indication. The message receiver of the SIP registrar detects the transmitted message, and the message generator thereof generates a message response, here a 200 ok message, indicated by the segment 46 for reply to the user agent. The 200 ok message, as indicated in Figure 2, includes an AOR value that is optionally encrypted, a base-algorithm, an opaque value, and a RAND algorithm value. The base algorithm identifies the encryption scheme used to create the EUID and the RAND identifies the algorithm that the SIP UA should use to randomize it further if it sees fit to choose so.

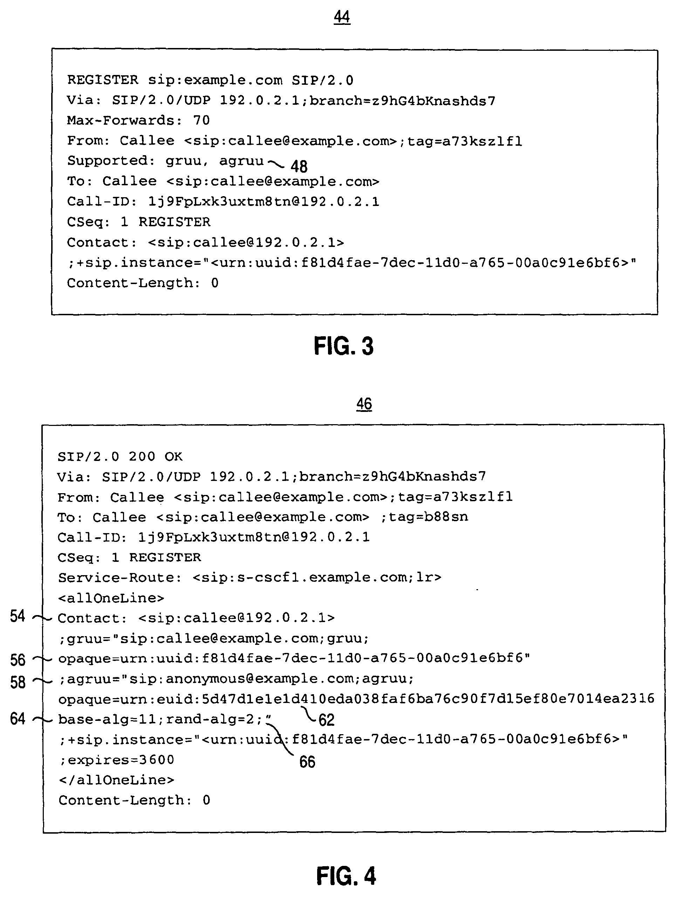

Figure 3 illustrates an exemplary register request 44. While various of the fields are formatted and populated with values that are conventional, the register request includes a supported field that is populated, together with an indication that the user agent further supports AGRUU. Here, the supported field includes such an AGRUU indication 48. That is to say, when a SIP user agent registers with the network, the registration is, in the exemplary implementation, as defined in the draft-IETF-SIP-GRUU-07, and includes the indication that the user agent wants assignation of a GRUU by providing a unique instance ID in the "sip.instance=" media tag in the contact header part of the message and by including an option tag "GRUU" in the supported header field in the request. And, as indicated by the "AGRUU" 48, the user agent indicates that it supports anonymous GRUUs by also including the option tag "AGRUU" in the supported header field. Another value could be used to indicate support for AGRUU.

The SIP registrar 22-1 that supports anonymous GRUUs, upon receiving the SIP register request that contains the supported header containing the option tags "GRUU" and "AGRUU" or other indication that indicates a request for a AGRUU, generates both a public GRUU and an anonymous GRUU. The public GRUU is compliant with the GRUUs defined in the aforementioned draft-IETF-SIP-GRUU document. And, both the public GRUU and the anonymous GRUU are provided in the response.

Figure 4 illustrates a representation of an exemplary 200 ok message 46 forming a register response message generated by the SIP registrar, or other network device. The message 46 is formatted generally in conformity with existing 200 ok message formats and includes a contact field 54. Here, the contact field is populated with an opaque value 56, an AGRUU value 58, an encrypted UID (EUID) value 62, a base algorithm value 64, and a RAND algorithm value 66.

The anonymous GRUU 58 contains an NAI (network address identifier) that is anonymous, or encrypted, and an opaque parameter that is encrypted using an encryption algorithm such as the randomizer algorithm (RAND-ALG) 60, shown in Figure 2. When decrypted, the encrypted opaque parameter value returns the value of the opaque parameter of the corresponding public GRUU and, selectably also, an identifier usable by the network node devices issuing the GRUU to locate the registrar that issued the GRUU or as an index to locate the stored contact associated with the GRUU. The encrypted opaque parameter is a URN of the format "EUID", (encrypted unique identifier), as shown at 62 in Figure 4. The user portion of the network address identifier is also able to be encrypted by application of the same algorithm rather than, as shown, using a fixed string, such as "anonymous".

A service route, such as that defined in the RFC 3608, is also returned, indicated in Figure 4 as service-route, and includes the address of a node. The node that is identified in the service-route field is a node that is capable of decrypting the GRUU and resolving the GRUU. In order for an anonymous GRUU to work with dialog-ID verification, requests with an anonymous GRUU in the contact for which the dialog-ID verification is required includes the URI received in the service-route field in the route set of an outgoing initial request, such as an invite message.

The base algorithm 64 that is returned in the message 46 identifies the algorithm used by the registrar to generate the encrypted opaque parameter value. The specifics of this algorithm are not necessarily understood by the user agent to which the message is sent. The tag that is returned to the user agent is provided to the user agent to permit the user agent to include the tag along with the GRUU in subsequent messages so that the home domain nodes are made aware of which algorithm had been used to encrypt the opaque value and, selectably also, to encrypt the user portions of the NAI. This inclusion permits the domain to use different algorithms and to change algorithms in the event, e.g., that an algorithm is compromised.

The RAND algorithm tag 66 that forms part of the contact header field identifies an encryption algorithm known to the user agent that can be used by the user agent further to randomize a received encrypted opaque value on a per call basis. Only the randomizer encryption algorithm is known to the user agent, and the corresponding decryption algorithm is known only to the network nodes in the domain that issues the GRUU. The randomizer encryption algorithm has two input parameters in addition to the seed of the encrypted opaque parameter value. These additional parameters comprise the "RAND" and the "dialog-ID" parameters. The "RAND" is a value, e.g., a random number used by the user agent when the user agent randomizes the encrypted opaque parameter of the GRUU. The dialog-ID is used in association with "RAND" to randomize the encrypted opaque parameter of the GRUU. The "dialog-ID" is an input that is used in association with the "RAND" to randomize the encrypted opaque parameter of the GRUU. The "dialog-ID" has specific semantics as, unless its value is zero, its value is derived from one of the parameters that identify the SIP dialog with the contact that contains the anonymous GRUU. In one implementation, the value is converted to a hexadecimal of the string of either the call-ID, the local-tag, or the remote-tag of the dialog depending on whether the anonymous GRUU belongs to an initiator of the dialog or by the recipient in the request that created it. Referring back to Figure 2, the local tag is identified at 72, the call ID tag is represented at 74, and the remote tag is identified at 75.

Both the base algorithm and the randomizer algorithm have the properties of preserving the uniqueness of the input string within the domain. The random algorithm exhibits this property even though the input parameters "RAND" and "dialog-ID" as there must be a determination of in what manner to decrypt the encrypted result. The randomizer algorithms are obtainable by the user agent in any of various manners. In one implementation, for instance, the algorithms are encoded in the software, downloaded to the user agent using a secure provisioning mechanism. Alternately, the algorithms are included as an application on a UICC or SIM card of a mobile user agent or other removable memory. Or, the algorithms are included as an application on a peripheral plugged into the user agent, such as a USB-connected device. The encoding and storage of such algorithms at the user agent is preferably resistant to tampering and analysis.

If the user agent includes a contact containing an anonymous GRUU in a request that creates a dialog, and the user agent requires the GRUU to be valid nearly for the period of time that the dialog exists, then, in one implementation, the user agent includes the call-ID (x) or local-tag (x) of the dialog with the anonymous GRUU along with a grid parameter.

If the user agent includes a contact containing an anonymous GRUU in a response to a request that creates a dialog, and the user agent requires the GRUU to be valid merely for the period of time for which the dialog exists, then the user agent includes, in one implementation, the remote-tag of the dialog with the anonymous GRUU along with the grid parameter.

The grid tag comports, e.g., with that defined in the aforementioned draft-IETF-SIP-GRUU. The grid tag is a user agent-generated value, in the exemplary implementation, that allows the user agent to associate the GRUU when the GRUU is utilized. When an anonymous GRUU is used, the "grid" tag value is set to the value used for "RAND" to randomize the GRUU.

If the user agent does not require that the anonymous GRUU be valid only for a period of time during which the dialog exists, then the user agent only includes the "grid" tag in the contact header, and the user agent does not include a call-ID, local-tag, or remote-tag. In this scenario, the value used for the dialog-ID, when randomizing the GRUU is zero, and no check is performed to see if the anonymous GRUU corresponds to an existing dialog involving the user agent that is assigned the decrypted GRUU.

When another user agent receives a request, or response, with a contact header that contains the anonymous GRUU, the other user agent is able to include the anonymous GRUU in the request-URI of a request in order to reach the user agent that included the anonymous GRUU. In one implementation, this is carried out using a mechanism analogous to that defined in the aforementioned draft IETF-SIP-GRUU-07 and does not require that the receiver of the anonymous request understand the anonymous GRUU extension.

A user agent that sends a request containing an anonymous GRUU in the contact header field includes in the request a route header containing the URI that is returned in the service-route header of the 200 ok message sent in response to a register request. The URI is a proxy that, when it receives the request and sees that there is an anonymous GRUU in the contact containing a "call-ID" or "local-tag" parameter, a record-route header is included in the forwarded request to ensure that it is on the route of all of the subsequent request for that dialog in order that it be able to verify that the dialog exists if the GRUU is used in the request-URI by another user agent.

If the anonymous GRUUs are supported by a domain, then all of the incoming requests must be record-routed by a proxy also for the reason that, likewise, a request containing an anonymous GRUU with a "remote-tag" in the request-URI can be verified against the state of the dialog.

When a request containing an anonymous GRUU, identified by the "AGRUU" tag or other tag, is received by a proxy at the domain that owns the GRUU, shown in the figures as example.com, the proxy uses the "RAND-ALG" tag to identify the randomizer algorithm used by the user agent to randomize the GRUU and then apply the algorithm to the value of the opaque parameter. Values are used from the "grid" tag and, if present, the "call-ID" or "remote-tag", or "local-tag" tag values with the anonymous GRUU. If only the "grid" tag is present, then a value of 0 is used for the dialog-ID parameter of the algorithm. Once the result is obtained, the result is provided to an algorithm identified by the "BASE-ALG" to return the value of the opaque parameter of the corresponding public GRU and also either the identifier to locate the registrar that issued the GRUU or the index to locate the stored contact associated with the GRUU. Depending on what is returned, the proxy forwards the request to the proxy that acts as the registrar that issued the GRUU or some other proxy that is able to match the contact. The proxy, in one implementation, when forwarding the request, uses the decrypted public GRUU opaque parameter in order to avoid additional decryption by the second proxy.

If a "call-ID" (74), "remote-tag" (75), or "local-tag" (72) is included in the anonymous GRUU, the request is routed by way of a network node device that has a dialog state for the dialog parameter that is included in the request. The network device comprises a proxy that record-routes the original request containing the anonymous GRUU in the contact header field. The proxy formed of the network device checks that the dialog still exists and then routes it to the registered contact of the user agent using procedures set forth in the aforementioned draft-IETF-SIP-GRUU-07.

In a further aspect of the present invention, the user part of the NAI of the anonymous GRUU is further encrypted and randomized. When encrypted and randomized, decryption permits proxies to resolve the NAI of the anonymous GRUU to the NAI (network asserted ID) of the public GRUU. Proxy handling is simplified as a proxy need not store and look up the public GRUU NAI based upon an opaque parameter value.

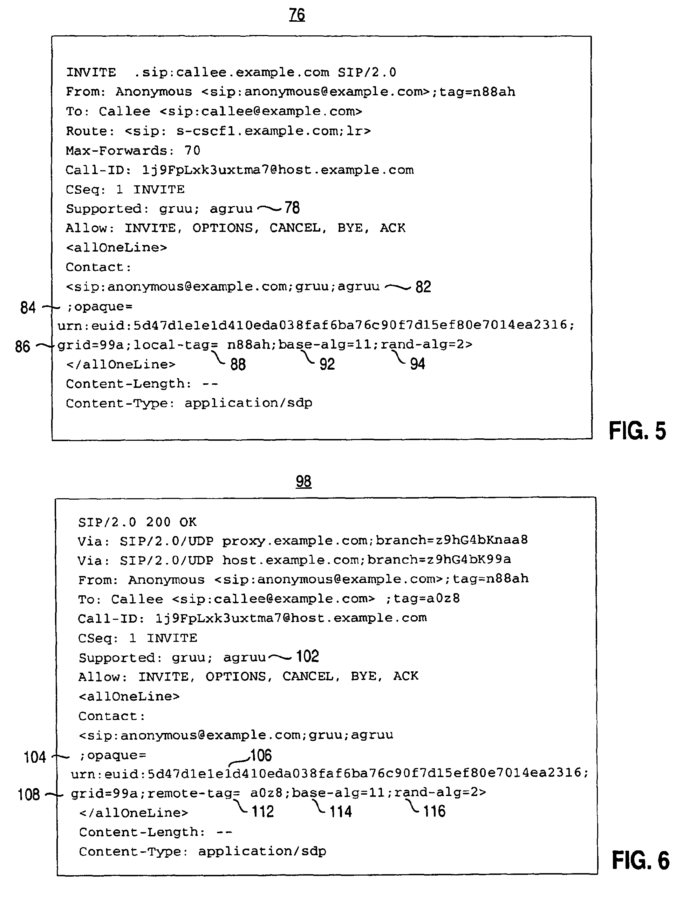

Figure 5 illustrates a representation of an exemplary invite request message generated by a message generator of a user agent, such as the message generator 32 of the user agent 12 shown in Figure 1. The invite message 76 is also formatted in general conformity with the SIP message format protocols and here also includes a supported field. The supported field includes an AGRUU tag 78 or other tag that indicates support for anonymous GRUU. And, the invite message includes a contact field including the AGRUU 82, an opaque value 84, a grid value 86, a local-tag value 88, a base-algorithm value 92, and a randomizer algorithm 94.

And, Figure 6 illustrates a representation of another 200 ok response, again also formatted in general conformity with the SIP formatting protocols. Again, the supported field includes an AGRUU tag 102. And, the 200 ok message further includes a contact header field that includes an opaque value 104, an EUID value 106, a grid value 108, a remote tag 112, a base algorithm 114, and a randomizer algorithm 116.

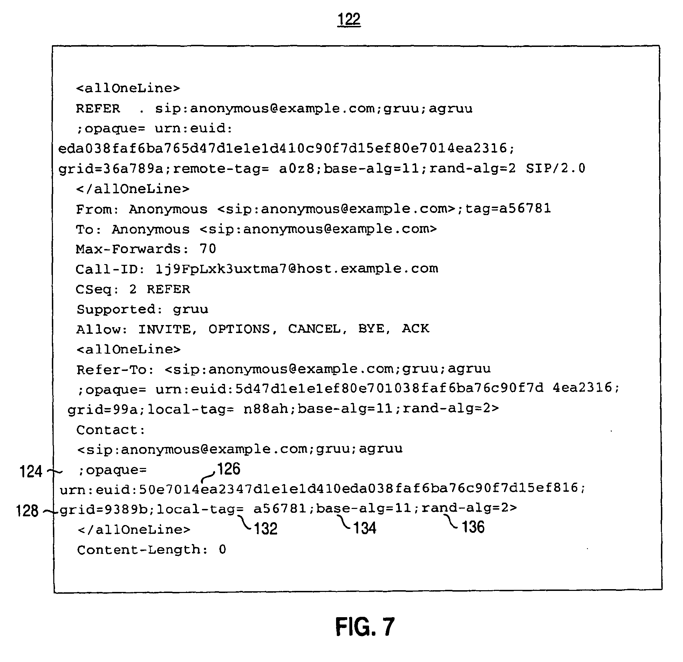

Figure 7 illustrates a representation of a refer message also generated pursuant to operation of an embodiment of the present invention. Again, the refer message is constructed in general conformity with the operating protocols and formats conventionally used in SIP message generation and signaling.

Here, again, the message includes a contact header field including an opaque value 124, an EUID value 126, a grid value 128, a local tag value 132, a base algorithm value 134, and a randomizer algorithm 136.

Review of the refer message shows that, to the user agent to which a call is transferred, the identity of the other user agent is anonymous. Privacy of communications is therefore provided through the generation and reception of messages and methodology of operation of an embodiment of the present invention.

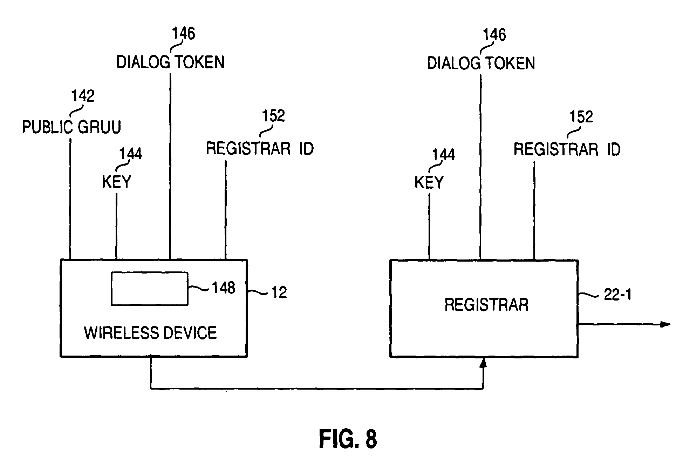

Figure 8 illustrates a user agent 12, here forming a wireless device, and a SIP registrar 22-1 of an alternative embodiment of the present invention. The wireless device may also be a fixed device that contains a SIP UA. Here, the user agent operates without assignment by the SIP registrar of an anonymous GRUU. Here, instead, the user agent, pursuant to a registration request, merely requests assignation of a GRUU. And, a GRUU is provided, by the registrar to the user agent.

Subsequently, when a new SIP session is to be commenced, a determination will have been made that the identity of the user should be restricted and not be provided to another party, a B party. If such a determination has been made, then the GRUU that is sent is unique to the particular dialog. And, the GRUU is to be anonymous to the called party.

The public GRUU, here indicated at 142, available at the user agent 12, is taken and is encrypted with a key 144 that is known to the user agent and to the registrar 22-1. When the user agent forms a GSM/UMTS device, the key is formed, e.g., of one of the AKA keys available at the device. In addition, a dialog token 146 is also used to encrypt the GRUU 142 so that the resultant, encrypted value is valid for only that particular SIP dialog. The token forms, e.g., a call-ID, a remote-tag, or a local-tag. The operations performed upon the GRUU are carried out by an anonymiser 148. And, thereby, the value used to randomize the GRUU is known only at the user agent.

Subsequent to the encryption of the public GRUU, a registrar ID 152 is appended to either the user name part of the NAI or to the domain part of the NAI. The resultant NAI, a new NAI, is then used as the GRUU. And, the GRUU is constructed in the contact header.

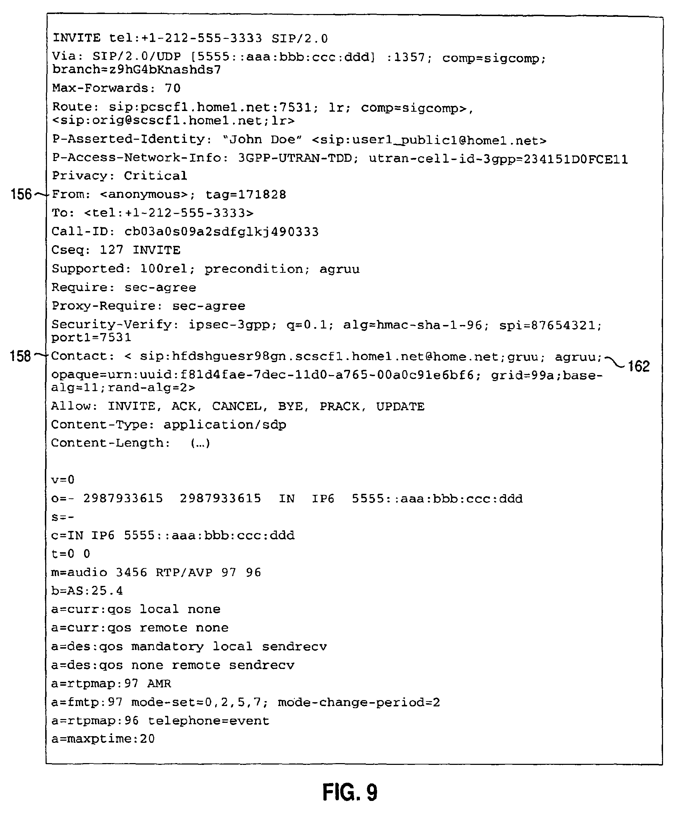

Figure 9 illustrates an exemplary invite message, represented generally at 156 that includes a contact header field 158 populated with a value 162, indicated to be an anonymous GRUU. In one implementation, the anonymous GRUU is a GRUU ID that is re-labeled as AGRUU for anonymous GRUU.

In other implementations, other variations of the contact header field value are used. For instance, home1.net@hfdshguesr98gn!scscfl.home1.net, hfdshsuesr98gn@scscfl.home1.net, or various encrypted versions of such values are used where hfdshguesr98gn is the encrypted AOR that is only known at the SIP registrar and SIP UA.

Subsequent to sending and receipt at the SIP registrar of the SIP invite message, the registrar examines the SIP message and detects that the contact header identifies use of an anonymous GRUU. The registrar uses the key 144 that has been stored against the SIP user agent and the dialog token 146 to decrypt the GRUU. And, an association is created in its record, such as hfdshguesr98gn=user1_public1. And, then the SIP invite message is forwarded.

Additionally, upon receipt of the SIP message, the registrar 22-1 examines the SIP message. The registrar detects, from the requested URI, of the message that it is an anonymous GRUU. And, then, the registrar takes the user name part that is derived from the r-URI and locates the correct AOR at the instance identification.

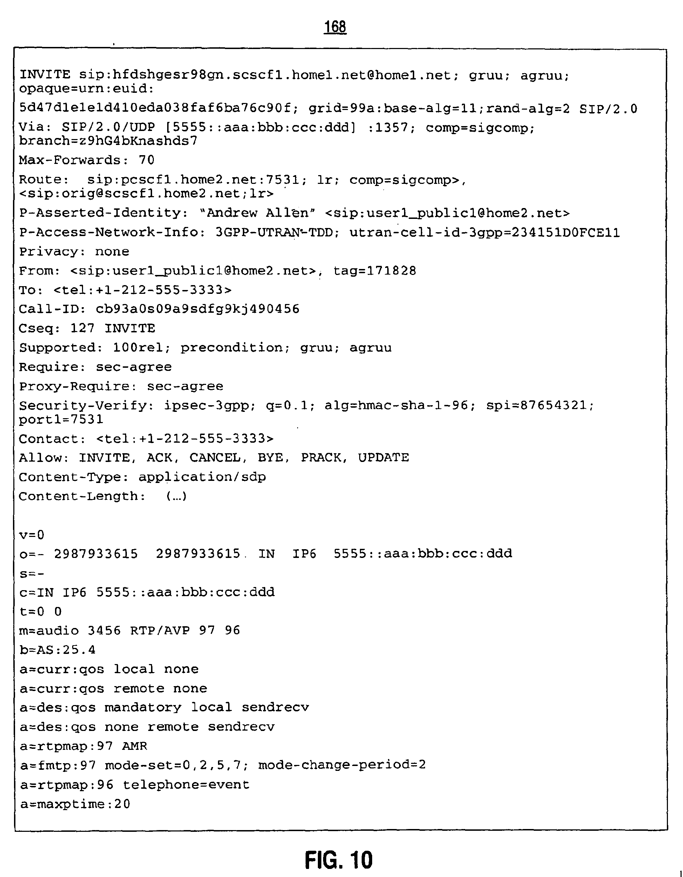

Figure 10 illustrates a representation, shown generally at 168, representative of the i-CSCF that receives an SIP message with the requested URI in any of the following formats.
< sip: hfdshguesr98gn.scscf1.home1.net@home1.net; gruu;agruu; opaque=urn:euid:5d47d1e1e1d410eda038faf6ba76c90f; grid=99a>
< sip: home1.net@ hfdshguesr98gn!scscf1.home1; gruu;agruu; opaque=urn:euid:5d47d1e1e1d410eda038faf6ba76c90f; grid=99a>
< sip: hfdshguesr98gn@scscf1.home1.net; gruu;agruu; opaque=urn:euid:5d47d1e1e1d410eda038faf6ba76c90f; grid=99a>

The values identify that an anonymous GRUU is being used. Then, the contact header is examined. Here, the user name part is examined, and the registrar ID is extracted. Rather than performing an HSS dip to find the registrar associated with the GRUU, the I-CSCF sends the SIP message directly to the registrar by mapping the registrar ID to the registrar.

Thereby, again, anonymity of the user agent is maintained. And, privacy of communications is better ensured.

The previous descriptions are of preferred examples for implementing the invention, and the scope of the invention should not necessarily be limited by this description. The scope of the present invention is defined by the following claims.

## Claims

1. Apparatus (26) for a user agent (12) operable pursuant to a Session Initiation Protocol, SIP, said apparatus (26) for facilitating use of a globally routable identifier while maintaining anonymity of the user agent (12), said apparatus (26) comprising:
a requestor (32) configured to generate a register request (44), the request (44) having a supported header field populated with a value indicating a request for anonymous operation; and
a response detector (34) configured to detect a response (46) returned to the user agent (12) in response to the request (44), said response detector (34) additionally configured and arranged to: detect a response (46) which includes therein a public globally routable user agent uniform resource identifier (GRUU) for the user agent (12) and an anonymous globally routable user agent uniform resource identifier (AGRUU) for the user agent (12), the AGRUU being configured to contain an anonymous network address identifier that does not disclose the user agent identity during subsequent SIP communications, said response detector (34) additionally configured and arranged to detect, in the AGRUU of the response (46), the anonymous network address identifier (NAI).

2. The apparatus of claim 1 wherein the request (44) comprises a SIP Register request containing a header part.

3. The apparatus of claim 2 wherein the header part of the SIP Register request comprises an option tag identifying request for a public globally routable user agent URI, uniform resource identifier.

4. The apparatus of claim 2 wherein the header part of the SIP Register request comprises an option tag identifying request for an anonymous globally routable user agent URI, uniform resource identifier.

5. The apparatus of claim 1 further comprising a dialog identification value generator, said dialog identification value generator configured to generate a dialog identification value for use by the user agent pursuant to a randomization operation.

6. The apparatus of claim 1 wherein the user agent (12) comprises a wireless device and wherein the apparatus further comprises a radio air interface for communicating the request.

7. Apparatus for a Session Initiation Protocol, SIP, registrar, said apparatus for acting upon a register request (44) for a globally routable identifier, said apparatus comprising:
a detector (38) adapted to receive an indication of the register request (44), said detector (38) configured to detect whether the request (44) includes a request for anonymous operation within a supported header field; and
a globally routable identifier assignor operable responsive to the request (44) detected by said detector (38), said globally routable identifier assignor configured to assign an anonymous globally routable user agent uniform resource identifier (AGRUU) and a public globally routable user agent uniform resource identifier (GRUU), the AGRUU being configured and arranged to contain an anonymous network address identifier (NAI) that does not disclose the user agent identity during subsequent SIP communications.

8. The apparatus of claim 7 wherein the anonymous globally routable user agent URI comprises an anonymous network asserted identifier.

9. The apparatus of claim 7 wherein the anonymous globally routable user agent URI comprises an encrypted network asserted identifier.

10. The apparatus of claim 7 wherein the anonymous globally routable user agent URI comprises an encrypted opaque parameter.

11. The apparatus of claim 10 further comprising a base algorithm identity tag generator configured to generate a base algorithm identity tag that identifies an algorithm-type effective to form the encrypted opaque parameter.

12. The apparatus of claim 10 further comprising random algorithm identity tag generator configured to generate a random algorithm identity tag that identifies an algorithm-type available for use to randomize further the encrypted opaque parameter.

13. The apparatus of claim 7 wherein at least part of the anonymous globally routable identifier is encrypted, and wherein said apparatus (28) further comprises a service route identifier configured to provide an address identifying a nodal location capable of decrypting the part of the anonymous globally routable identifier that is encrypted.

14. The apparatus of claim 1 or 7 wherein the anonymous globally routable user agent uniform resource identifier (AGRUU) is included in a SIP contact header.

15. A method for facilitating a Session Initiation Protocol, SIP, communication by a user agent (12), wherein the identity of the user agent (12) is anonymous, said method comprising the operations of:
generating, at the user agent, a request (44) having a supported header field populated with a value indicating a request for anonymous operation; and
detecting a response (46) returned to the user agent (12) in response to the request (44) generated during said operation of generating, said response (46) including therein a public globally routable user agent uniform resource identifier (GRUU) and an anonymous globally routable user agent uniform resource identifier (AGRUU) (58), the AGRUU containing an anonymous network address identifier (NAI) that does not disclose the user agent identity during subsequent SIP communications.

16. The method of claim 15 further comprising the operation of encrypting a portion of the anonymous globally routable user agent uniform resource identifier assigned to said user agent (12) during said operation of assigning.

17. The method of claim 16 further comprising the operation of decrypting the portion of the anonymous globally routable user agent uniform resource identifier encrypted subsequent to said operation of sending.

18. The method of any of claims 14 to 16, wherein the anonymous globally routable user agent uniform resource identifier (AGRUU) is included in a SIP contact header.

## Patentansprüche

1. Vorrichtung (26) für einen Benutzer-Agent (12), der gemäß einem Sitzungsinitiierungsprotokoll, SIP (Session Initiation Protocol), betriebsfähig ist, wobei die Vorrichtung (26) vorgesehen ist zur Erleichterung einer Verwendung eines global leitbaren Identifizierers, während eine Anonymität des Benutzer-Agents (12) beibehalten wird, wobei die Vorrichtung (26) aufweist:
einen Anforderer (32), der konfiguriert ist, eine Register-Anforderung (44) zu erzeugen, wobei die Anforderung (44) ein unterstütztes Header-Feld hat, das einen Wert aufweist, der eine Anforderung für eine anonyme Operation anzeigt; und
einen Antwort-Detektor (34), der konfiguriert ist, eine Antwort (46) zu erfassen, die an den Benutzer-Agent (12) zurückgesendet wird als Antwort auf die Anforderung (44), wobei der Antwort-Detektor (34) weiter konfiguriert und ausgebildet ist: eine Antwort (46) zu erfassen, die einen öffentlichen global leitbaren Benutzer-Agent-Einheits-Ressourcen-Identifizierer (GRUU - globally routable user agent uniform resource identifier) für den Benutzer-Agent (12) und einen anonymen global leitbaren Benutzer-Agent-Einheits-Ressourcen-Identifizierer (AGRUU - anonymous globally routable user agent uniform resource identifier) für den Benutzer-Agent (12) umfasst, wobei der AGRUU konfiguriert ist, einen anonymen Netzwerkadresse-Identifizierer zu enthalten, der die Identität des Benutzer-Agents während nachfolgender SIP-Kommunikationen nicht offenbart, wobei der Antwort-Detektor (34) weiter konfiguriert und
ausgebildet ist, in dem AGRUU der Antwort (46) den anonymen Netzwerkadresse-Identifizierer (NAI - network address identifier) zu erfassen.

2. Vorrichtung gemäß Anspruch 1, wobei die Anforderung (44) eine SIP-Register-Anforderung aufweist, die einen Header-Teil enthält.

3. Vorrichtung gemäß Anspruch 2, wobei der Header-Teil der SIP-Register-Anforderung ein Options-Tag aufweist, das eine Anforderung für einen öffentlichen global leitbaren Benutzer-Agent-URI (uniform resource identifier) identifiziert.

4. Vorrichtung gemäß Anspruch 2, wobei der Header-Teil der SIP-Register-Anforderung ein Options-Tag aufweist, das eine Anforderung für einen anonymen global leitbaren Benutzer-Agent-URI (uniform resource identifier) identifiziert.

5. Vorrichtung gemäß Anspruch 1, die weiter aufweist einen Dialog-Identifikations-Wert-Generator, wobei der Dialog-Identifikations-Wert-Generator konfiguriert ist, einen Dialog-Identifikations-Wert zu erzeugen zur Verwendung durch den Benutzer-Agent gemäß einer Randomisierungsoperation.

6. Vorrichtung gemäß Anspruch 1, wobei der Benutzer-Agent (12) eine drahtlose Vorrichtung aufweist und wobei die Vorrichtung weiter eine Funk-Luft-Schnittstelle zur Kommunikation der Anforderung aufweist.

7. Vorrichtung für einen Sitzungsinitiierungsprotokoll(SIP - Session Initiation Protocol)-Registrator, wobei die Vorrichtung vorgesehen ist zum Handeln auf eine Register-Anforderung (44) für einen global leitbaren Identifizierer, wobei die Vorrichtung aufweist:
einen Detektor (38), der ausgebildet ist, eine Anzeige der Register-Anforderung (44) zu empfangen, wobei der Detektor (38) konfiguriert ist, zu erfassen, ob die Anforderung (44) eine Anforderung für eine anonyme Operation in einem unterstützen Header-Feld umfasst; und
einen Zuweiser eines global leitbaren Identifizierers, der betriebsfähig ist als Reaktion auf die Anforderung (44), die erfasst wird durch den Detektor (38), wobei der Zuweiser eines global leitbaren Identifizierers konfiguriert ist, einen anonymen global leitbaren Benutzer-Agent-Einheits-Ressourcen-Identifizierer (AGRUU - anonymous globally routable user agent uniform
resource identifier) und einen öffentlichen global leitbaren Benutzer-Agent-Einheits-Ressourcen-Identifizierer (GRUU - globally routable user agent uniform resource identifier) zuzuweisen, wobei der AGRUU konfiguriert und ausgebildet ist, einen anonymen Netzwerkadresse-Identifizierer (NAI - network address identifier) zu enthalten, der die Identität des Benutzer-Agents während nachfolgender SIP-Kommunikationen nicht offenbart.

8. Vorrichtung gemäß Anspruch 7, wobei der anonyme global leitbare Benutzer-Agent-URI einen anonymen Netzwerk-bezogenen Identifizierer aufweist.

9. Vorrichtung gemäß Anspruch 7, wobei der anonyme global leitbare Benutzer-Agent-URI einen verschlüsselten Netzwerk-bezogenen Identifizierer aufweist.

10. Vorrichtung gemäß Anspruch 7, wobei der anonyme global leitbare Benutzer-Agent-URI einen verschlüsselten Opak-Parameter aufweist.

11. Vorrichtung gemäß Anspruch 10, die weiter aufweist einen Basis-Algorithmus-Identitäts-Tag-Generator, der konfiguriert ist, ein Basis-Algorithmus-Identitäts-Tag zu erzeugen, das einen Algorithmus-Typ identifiziert, der effektiv ist, den verschlüsselten Opak-Parameter zu bilden.

12. Vorrichtung gemäß Anspruch 10, die weiter aufweist einen Zufalls-Algorithmus-Identitäts-Tag-Generator, der konfiguriert ist, ein Zufalls-Algorithmus-Identitäts-Tag zu erzeugen, das einen Algorithmus-Typ identifiziert, der zur Verwendung verfügbar ist, um den verschlüsselten Opak-Parameter weiter zu randomisieren.

13. Vorrichtung gemäß Anspruch 7, wobei zumindest ein Teil des anonymen global leitbaren Identifizierers verschlüsselt ist und wobei die Vorrichtung (28) weiter aufweist einen Dienstroute-Identifizierer, der konfiguriert ist, eine Adresse vorzusehen, die eine Knotenstelle identifiziert, die fähig ist, den Teil des anonymen global leitbaren Identifizierers zu entschlüsseln, der verschlüsselt ist.

14. Vorrichtung gemäß Anspruch 1 oder 7, wobei der anonyme global leitbare Benutzer-Agent-Einheits-Ressourcen-Identifizierer (AGRUU) in einem SIP-Kontakt-Header enthalten ist.

15. Verfahren zur Erleichterung einer Sitzungsinitiierungsprotokoll(SIP - Session Initiation Protocol)-Kommunikation durch einen Benutzer-Agent (12), wobei die Identität des Benutzer-Agents (12) anonym ist, wobei das Verfahren die Operationen aufweist:
Erzeugen an dem Benutzer-Agent einer Anforderung (44), die ein unterstütztes Header-Feld hat, das einen Wert aufweist, der eine Anforderung für eine anonyme Operation anzeigt; und
Erfassen einer Antwort (46), die an den Benutzer-Agent (12) zurückgesendet wird als Antwort auf die Anforderung (44), erzeugt während der Operation eines Erzeugens, wobei die Antwort (46) umfasst einen öffentlichen global leitbaren Benutzer-Agent-Einheits-Ressourcen-Identifizierer (GRUU - globally routable user agent uniform resource identifier) und einen anonymen global leitbaren Benutzer-Agent-Einheits-Ressourcen-Identifizierer (AGRUU - anonymous globally routable user agent uniform resource identifier) (58), wobei der AGRUU einen anonymen Netzwerkadresse-Identifizierer (NAI - network address identifier) enthält, der die Identität des Benutzer-Agents während nachfolgender SIP-Kommunikationen nicht offenbart.

16. Verfahren gemäß Anspruch 15, das weiter aufweist die Operation eines Verschlüsselns eines Teils des anonymen global leitbaren Benutzer-Agent-Einheits-Ressourcen-Identifizierers, der dem Benutzer-Agent (12) während der Operation des Zuweisens zugewiesen wird.

17. Verfahren gemäß Anspruch 16, die weiter aufweist die Operation eines Entschlüsselns des Teils des anonymen global leitbaren Benutzer-Agent-Einheits-Ressourcen-Identifizierers, der nachfolgend auf die Operation des Sendens verschlüsselt wird.

18. Verfahren gemäß einem der Ansprüche 14 bis 16, wobei der anonyme global leitbare Benutzer-Agent-Einheits-Ressourcen-Identifizierer (AGRUU) in einem SIP-Kontakt-Header enthalten ist.

## Revendications

1. Appareil (26) pour un agent utilisateur (12) pouvant être mis en oeuvre conformément à un protocole de lancement de session, SIP (pour « Session Initiation Protocol »), ledit appareil (26) étant destiné à faciliter l'utilisation d'un identifiant acheminable de par le monde tout en maintenant l'anonymat de l'agent utilisateur (12), ledit appareil (26) comportant :
un demandeur (32) configuré pour générer une demande d'enregistrement (44), la demande (44) étant un champ d'en-tête supporté occupé par une valeur indiquant une demande pour une opération anonyme ; et
un détecteur de réponse (34) configuré pour détecter une réponse (46) envoyée à l'agent utilisateur (12) en réponse à la demande (44), ledit détecteur (34) de réponse étant en outre configuré et agencé pour : détecter une réponse (46) qui contient un identifiant de ressource uniforme public d'agent utilisateur acheminable de par le monde (GRUU) (pour « globally routable user agent uniform ressource identifier ») pour l'agent utilisateur (12) et un identifiant de ressource uniforme anonyme d'agent utilisateur acheminable de part le monde (AGRUU) (pour « anonymous globally routable user agent uniform ressource identifier ») pour l'agent utilisateur (12), le GRUU étant configuré pour contenir un identifiant d'adresse de réseau anonyme qui ne divulgue pas l'identité de l'agent utilisateur pendant des communications SIP subséquentes, ledit détecteur (34) de réponse étant en outre configuré et agencé pour détecter, dans le GRUU de la réponse (46), l'identifiant d'adresse de réseau anonyme (NAI) (pour « network address identifier »).

2. Appareil selon la revendication 1, dans lequel la demande (44) comprend une demande d'enregistrement SIP contenant une partie d'en-tête.

3. Appareil selon la revendication 2, dans lequel la partie d'en-tête de la demande d'enregistrement SIP comprend une demande d'identification d'étiquette d'option pour un identifiant de ressource uniforme d'agent utilisateur acheminable de par le monde, public, URI.

4. Appareil selon la revendication 2, dans lequel la partie d'en-tête de la demande de registre SIP comprend une demande d'identification d'étiquette d'option pour un identifiant de ressource uniforme d'agent utilisateur acheminable de par le monde, anonyme, URI.

5. Appareil selon la revendication 1, comportant en outre un générateur de valeur d'identification de dialogue, ledit générateur de valeur d'identification de dialogue étant configuré pour générer une valeur d'identification de dialogue destinée à être utilisée par l'agent utilisateur conformément à une opération de randomisation.

6. Appareil selon la revendication 1, dans lequel l'agent utilisateur (12) comporte un dispositif sans fil et dans lequel l'appareil comporte en outre une interface radio-air pour communiquer la demande.

7. Appareil pour l'enregistrement d'un protocole de lancement de session, SIP, ledit appareil étant destiné à agir sur une demande d'enregistrement (44) pour un identifiant acheminable de par le monde, ledit appareil comportant :
un détecteur (38) conçu pour recevoir une indication de la demande d'enregistrement (44), ledit détecteur (38) étant configuré pour détecter si la demande (44) comprend une demande pour une opération anonyme dans un champ d'en-tête supporté ; et
un dispositif d'affectation d'un identifiant acheminable de par le monde qui peut être mis en oeuvre en réponse à la demande (44) détectée par ledit détecteur (38), ledit dispositif d'affectation d'identifiant acheminable de par le monde étant configuré pour affecter un identifiant de ressource uniforme d'agent utilisateur acheminable de par le monde, anonyme (AGRUU) et un identifiant de ressource uniforme d'agent utilisateur acheminable de par le monde, public, (GRUU), l'AGRUU étant configuré et agencé pour contenir un identifiant d'adresse de réseau anonyme (NAI) qui ne divulgue pas l'identité de l'agent utilisateur au cours de communications SIP suivantes.

8. Appareil selon la revendication 7, dans lequel l'URI d'agent utilisateur acheminable de par le monde, anonyme, comprend un identifiant confirmé de réseau anonyme.

9. Appareil selon la revendication 7, dans lequel l'URI d'agent d'utilisateur acheminable de par le monde anonyme comprend un identifiant confirmé de réseau crypté.

10. Appareil selon la revendication 7, dans lequel l'URI d'agent d'utilisateur acheminable de par le monde anonyme comprend un paramètre opaque crypté.

11. Appareil selon la revendication 10, comportant en outre un générateur d'étiquette d'identité d'algorithme de base configuré pour générer une étiquette d'identité d'algorithme de base qui identifie un type d'algorithme efficace pour former le paramètre opaque crypté.

12. Appareil selon la revendication 10, comportant en outre un générateur d'étiquette d'identité d'algorithme aléatoire configuré pour générer une étiquette d'identité d'algorithme aléatoire qui identifie un type d'algorithme disponible pour être utilisé dans la randomisation supplémentaire du paramètre opaque crypté.

13. Appareil selon la revendication 7, dans lequel au moins une partie de l'identifiant acheminable de par le monde, anonyme, est cryptée, et ledit appareil (28) comportant en outre un identifiant d'acheminement de service configuré pour produire une adresse identifiant un emplacement nodal capable de décrypter la partie de l'identifiant acheminable de par le monde, anonyme, qui est cryptée.

14. Appareil selon la revendication 1 ou 7, dans lequel l'identifiant de ressource uniforme d'agent utilisateur acheminable de par le monde, anonyme (AGRUU) est inclus dans un en-tête de contact SIP.

15. Procédé pour faciliter une communication par un protocole de lancement de session, SIP, par un agent utilisateur (12), dans lequel l'identité de l'agent utilisateur (12) est anonyme, ledit procédé comprenant les opérations qui consistent :
à générer, au niveau de l'agent utilisateur, une demande (44) ayant un champ d'en-tête supporté, occupé par une valeur indiquant une demande pour une opération anonyme ; et
à détecter une réponse (46) envoyé à l'agent utilisateur (12) en réponse à la demande (44) généré au cours de ladite opération de génération, ladite réponse (46) contenant un identifiant de ressource uniforme d'agent utilisateur acheminable de par le monde, public (GRUU) et un identifiant de ressource uniforme d'agent utilisateur acheminable de par le monde, anonyme (AGRUU) (58), l'AGRUU contenant un identifiant d'adresse de réseau anonyme (NAI) qui ne divulgue pas l'identité de l'agent utilisateur durant des communications SIP suivantes.

16. Procédé selon la revendication 15, comprenant en outre l'opération de cryptage d'une partie de l'identifiant de ressource uniforme d'agent utilisateur acheminable de par le monde, anonyme, affectée audit agent utilisateur (12) pendant ladite opération d'affectation.

17. Procédé selon la revendication 16, comprenant en outre l'opération de décryptage de la partie de l'identifiant de ressource uniforme d'agent utilisateur acheminable de par le monde, anonyme, cryptée après ladite opération d'envoi.

18. Procédé selon l'une quelconque des revendications 14 à 16, dans lequel l'identifiant de ressource uniforme d'agent utilisateur acheminable de par le monde, anonyme, (AGRUU), est inclus dans un en-tête de contact SIP.
